# EUROPEAN PATENT APPLICATION

(11) **EP 4 597 942 A1**
(43) Date of publication of application: **06.08.2025**
(21) Application number: 22959777.8
(22) Date of filing: 26.09.2022
(51) Int. Cl.: H04L 27/00, H04W 12/02, H04W 12/06, H04W 12/69

(54) **SENSING IMPLEMENTATION METHOD AND APPARATUS, COMMUNICATION DEVICE, AND STORAGE MEDIUM**

(71) Applicant: Beijing Xiaomi Mobile Software Co., Ltd., Beijing 100085 (CN)
(72) Inventor: WU, Jinhua, Beijing 100085 (CN)
(74) Representative: Dehns Germany Partnerschaft mbB
(86) International application number: PCT/CN2022/121498
(87) International publication number: WO 2024/065125

(57) **Abstract**

Embodiments of the present disclosure provide a sensing implementation method based on subscription of a sensed object. The method is executed by a first network function. The method comprises: transmitting first request information to a second network function, wherein the first request information is used for acquiring sensing privacy subscription information of a sensed object in wireless sensing. Here, the first network function can transmit, to the second network function, the first request information for acquiring the sensing privacy subscription information of the sensed object in wireless sensing, so as to obtain, from the second network function, the sensing privacy subscription information comprising whether the sensed object is allowed to execute wireless sensing, and execute a wireless sensing process on the basis of the sensing privacy subscription information. Compared with the situation where whether the sensed object is allowed to execute wireless sensing is not determined, the execution of the wireless sensing process is more reliable and safer.

## Description

### TECHNICAL FIELD

The present invention relates to, but is not limited to, the field of wireless communication technologies, and particularly, relates to a sensing implementation method and apparatus based on a sensed object subscription, a communication device and a storage medium.

### BACKGROUND

Wireless sensing technologies aim at acquiring information about a remote object and its characteristics without physically contacting it. Sensed data of the object and its surrounding may be utilized for analysis, so that meaningful information about the object and its characteristics is obtained. Across multiple market segments and verticals, sensing services based on 5th generation mobile communication technologies (5G) may be beneficial for intelligent transportation, aviation, enterprises, smart city, smart home, factories, consumer applications, extended reality, and public sectors. In the wireless sensing technologies, it is expected to consider providing a privacy protection for the sensed object.

### SUMMARY

Examples of the present invention disclose a sensing implementation method and apparatus based on a sensed object subscription, a communication device and a storage medium.

According to a first aspect of the examples of the present invention, a sensing implementation method based on a sensed object subscription is provided, which is performed by a first network function and includes:
sending a first request message to a second network function,
wherein the first request message is configured to acquire sensing privacy subscription information of a sensed object in a wireless sensing.

According to a second aspect of the examples of the present invention, a sensing implementation method based on a sensed object subscription is provided, which is performed by a second network function and includes:
receiving a first request message sent by a first network function,
wherein the first request message is configured to acquire sensing privacy subscription information of a sensed object in a wireless sensing.

According to a third aspect of the examples of the present invention, a sensing implementation method based on a sensed object subscription is provided, which is performed by a sensing entity and includes:
receiving a third request message sent by a first network function,
wherein the third request message includes an identifier (ID) of a sensed object and/or an ID of a sensed object in a wireless sensing.

According to a fourth aspect of the examples of the present invention, a wireless sensing system is provided. The system includes a first network function and a second network function, wherein the first network function performs any method performed by the first network function as described in the present invention, and the second network function performs any method performed by the second network function as described in the present invention.

According to a fifth aspect of the examples of the present invention, a sensing implementation apparatus based on a sensing object subscription is provided, which includes:
a sending module, configured to send a first request message to a second network function,
wherein the first request message is configured to acquire sensing privacy subscription information of a sensed object in a wireless sensing.

According to a sixth aspect of the examples of the present invention, a sensing implementation apparatus based on a sensing object subscription is provided, which includes:
a receiving module, configured to receive a first request message sent by a first network function,
wherein the first request message is configured to acquire sensing privacy subscription information of a sensed object in a wireless sensing.

According to a seventh aspect of the examples of the present invention, a wireless sensing apparatus is provided, which includes:
a receiving module, configured to receive a third request message sent by a first network function,
wherein the third request message includes an ID of a sensing object and/or an ID of a sensed object in a wireless sensing.

According to an eighth aspect of the examples of the present invention, a communication device is provided, which includes:
one or more processors; and
one or more memories for storing executable instructions for the one or more processors.

The one or more processors are configured to implement, when running the executable instructions, the method described according to any example of the present invention.

According to a ninth aspect of the examples of the present invention, a computer storage medium is provided, in which a computer executable program is stored. The computer executable program, when executed by one or more processors, implements the method described according to any example of the present invention.

In the examples of the present invention, the first request message is sent to the second network function, where the first request message is configured to acquire the sensing privacy subscription information of the sensed object in the wireless sensing. In this case, the first network function may send to the second network function for acquiring the sensing privacy subscription information of the sensed object in the wireless sensing, so as to acquire, from the second network function, the sensing privacy subscription information including whether the wireless sensing is allowed to be performed on the sensed object, and perform a wireless sensing procedure based on the sensing privacy subscription information. Compared with a case where whether the wireless sensing is allowed to be performed on the sensed object is not determined, it may be more reliable and safer to perform the wireless sensing procedure.

### BRIEF DESCRIPTION OF THE DRAWINGS

FIG. 1 illustrates a schematic structural diagram of a wireless communication system according to an example.
FIG. 2 illustrates a schematic flowchart of a sensing implementation method based on a sensed object subscription according to an example.
FIG. 3 illustrates a schematic flowchart of a sensing implementation method based on a sensed object subscription according to an example.
FIG. 4 illustrates a schematic flowchart of a sensing implementation method based on a sensed object subscription according to an example.
FIG. 5 illustrates a schematic flowchart of a sensing implementation method based on a sensed object subscription according to an example.
FIG. 6 illustrates a schematic flowchart of a sensing implementation method based on a sensed object subscription according to an example.
FIG. 7 illustrates a schematic flowchart of a sensing implementation method based on a sensed object subscription according to an example.
FIG. 8 illustrates a schematic flowchart of a sensing implementation method based on a sensed object subscription according to an example.
FIG. 9 illustrates a schematic flowchart of a sensing implementation method based on a sensed object subscription according to an example.
FIG. 10 illustrates a schematic flowchart of a sensing implementation method based on a sensed object subscription according to an example.
FIG. 11 illustrates a schematic flowchart of a sensing implementation method based on a sensed object subscription according to an example.
FIG. 12 illustrates a schematic flowchart of a sensing implementation method based on a sensed object subscription according to an example.
FIG. 13 illustrates a schematic flowchart of a sensing implementation method based on a sensed object subscription according to an example.
FIG. 14 illustrates a schematic diagram of a sensing implementation system based on a sensed object subscription according to an example.
FIG. 15 illustrates a schematic diagram of a sensing implementation apparatus based on a sensed object subscription according to an example.
FIG. 16 illustrates a schematic diagram of a sensing implementation apparatus based on a sensed object subscription according to an example.
FIG. 17 illustrates a schematic diagram of a sensing implementation apparatus based on a sensed object subscription according to an example.
FIG. 18 illustrates a schematic structural diagram of a terminal according to an example.
FIG. 19 illustrates a block diagram of a base station according to an example.
FIG. 20 illustrates a schematic diagram of a network architecture according to an example.

### DETAILED DESCRIPTION OF THE EMBODIMENTS

Examples will be described in detail here with the illustrations thereof illustrated in the drawings. Where the following descriptions involve the drawings, like numerals in different drawings refer to like or similar elements unless otherwise indicated. The implementations described in the following examples do not represent all implementations consistent with the examples of the present invention. Rather, they are merely illustrations of apparatuses and methods consistent with some aspects of the examples of the present invention as detailed in the appended claims.

The terms used in the examples of the present invention are for the purpose of describing particular examples only, and are not intended to limit the examples of the present invention. Terms determined by "a" and "the" in their singular forms used in the examples of the present invention and the appended claims are also intended to include their plural forms, unless clearly indicated otherwise in the context. It is also to be understood that the term "and/or" as used herein is and includes any and all possible combinations of one or more of the associated listed items.

It is to be understood that, although terms "first," "second," "third," and the like may be adopted in the examples of the present invention to describe various information, such information should not be limited to these terms. These terms are only used to distinguish the information of the same type with each other. For example, without departing from the scope of the examples of the present invention, first information may be referred to as second information; and similarly, second information may also be referred to as first information. Depending on the context, the word "if" as used herein may be interpreted as "when," "upon," or "in response to determining."

For brevity and for convenience of understanding, the term "greater than" or "less than" are used herein when a size relationship is presented. However, it is to be understood by those skilled in the art that the term "greater than" also covers the meaning of "greater than or equal to", and the term "less than" also covers the meaning of "less than or equal to".

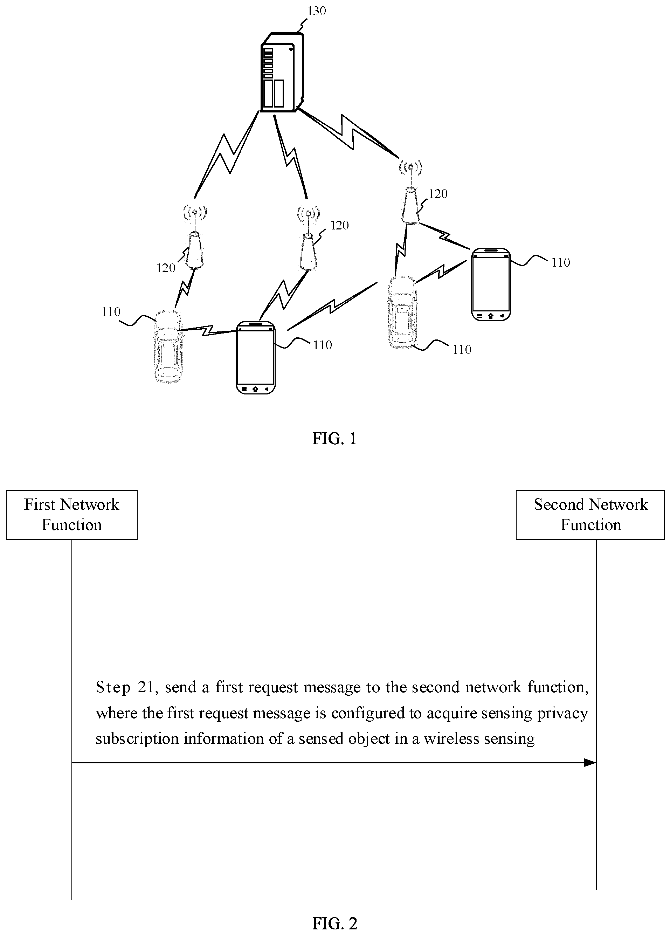

Please refer to FIG. 1, which illustrates a schematic structural diagram of a wireless communication system provided in an example of the present invention. As illustrated in FIG. 1, the wireless communication system is a communication system based on mobile communication technologies. The wireless communication system may include several user equipment (UE) 110 and several access network nodes 120. It is to be noted that the access network node may be a base station 120, and the UE 110 may be a terminal. The terminal involved in the present invention may be but not limited to a mobile phone, a wearable device, a vehicle-mounted terminal, a road side unit (RSU), a smart home terminal, an industrial sensor device and/or a medical device, etc. In some examples, the terminal may be a reduced capability (Redcap) terminal or a new radio (NR) terminal of a predetermined version (e.g., a release 17 (R17) NR terminal).

The UE 110 may refer to a device that provides voice and/or data connectivity for a user. The UE 110 may communicate with one or more core networks via a radio access network (RAN). The UE 110 may be Internet of Things (IoT) UE, such as a sensor device, a mobile phone, and a computer with IoT UE. For example, it may be a fixed, portable, pocket-sized, handheld, computer-built-in, or vehicle-mounted device, such as a station (STA), a subscriber unit, a subscriber station, a mobile station, a mobile, a remote station, an access point, a remote terminal, an access terminal, a user terminal, a user agent, a user device, or UE. Or, the UE 110 may be a device such as an unmanned aerial vehicle. Or, the UE 110 may be a vehicle-mounted device. For example, it may be an on-board computer with a wireless communication function, or wireless UE externally connected to the on-board computer. Or, the UE 110 may be a roadside device, for example, a street lamp, a signal lamp or another roadside device with a wireless communication function.

The base station 120 may be a network side device in the wireless communication system. The wireless communication system may be a 4th generation mobile communication (4G) system, which is also known as a long term evolution (LTE) system. Or, the wireless communication system may be a 5th generation mobile communication (5G) system, which is also known as an NR system or a 5G NR system. Or, the wireless communication system may be a next generation system of the 5G system or another future wireless communication system. An access network in the 5G system may be called a new generation-radio access network (NG-RAN).

The base station 120 may be an evolved Node-B (eNB) adopted in the 4G system. Alternatively, the base station 120 may be a next generation Node-B (gNB) adopting a centralized and distributed architecture in the 5G system. When adopting the centralized and distributed architecture, the base station 120 usually includes a central unit (CU) and at least two distributed units (DU). The central unit is provided with protocol stacks of a packet data convergence protocol (PDCP) layer, a radio link control protocol (RLC) layer, and a media access control (MAC) layer. The distributed unit is provided with protocol stacks of a physical (PHY) layer. The examples of the present invention do not limit the specific implementations of the base station 120.

A wireless connection may be established between the base station 120 and the UE 110 through a wireless air interface. In different implementations, the wireless air interface is a wireless air interface based on 4G network technology standards; or, the wireless air interface is a wireless air interface based on 5G network technology standards, for example the wireless air interface is an NR; or, the wireless air interface may be a wireless air interface based on next-generation mobile communication network technology standards of the 5G or other future mobile communication network technology standards.

In some examples, an end-to-end (E2E) connection may also be established between UE 110, such as a vehicle-to-vehicle (V2V) communication, a vehicle-to-infrastructure (V2I) communication or a vehicle-to-pedestrian (V2P) communication in a scenario of a vehicle-to-everything (V2X) communication.

Herein, the UE may be regarded as a terminal in the following examples.

In some examples, the mentioned wireless communication system may further include a core network device 130.

The several base stations 120 are connected to the core network device 130 separately. The core network device 130 may be a core network device in the wireless communication system. In this case, the core network device may correspond to a network function, for example, a communication node such as an access and mobility management function (AMF), a user plane function (UPF) and a session management function (SMF). The example of the present invention does not limit the implementation forms of the core network device 130.

In order to facilitate understanding by those skilled in the art, the examples of the present invention list multiple implementations to clearly describe the technical solutions of the examples of the present invention. Of course, those skilled in the art may understand that the multiple examples provided in the examples of the present invention may be performed individually, performed together by combining with one or more methods in other examples of the examples of the present invention, or performed, alone or after the combination, together with some methods in other related technologies, which is not limited by the examples of the present invention.

The application scenarios involved in the present invention are first described.

Radio detection and ranging (Radar) is a widely used wireless sensing technology that uses radio waves to determine a distance (range), an angle, or an instantaneous linear velocity of an object. There are other sensing technologies including non-radio frequency (non-RF) sensors, which have been used in other areas and whose related products include time-of-flight (ToF) cameras, accelerometers, gyroscopes and Lidar, etc.

Integrated sensing and communication in a 5G system means that sensing capabilities are provided by the same 5G NR wireless communication system and infrastructure used for communications, and sensing information may be derived from radio frequency (RF) based and/or non-RF based sensors. In general, it could involve communication assisted sensing scenarios, for example, where the 5G communication system (5GS) provides sensing services or sensing assisted communications, where sensing information related to communication channels or environment is used to improve the communication services of the 5G system itself, and where the sensing information may be used to assist radio resource management, interference mitigation, beam management, mobility, etc.

Mobile operators may play an important role in providing 5GS-based integrated sensing and communication to customers, including management and control of 5G-based sensing services. For example, the operators may play a role to enhance V2X type of services, specifically for infrastructure assisted environment sensing, infrastructure-based tele-operated driving, high-definition map collecting and sharing, and/or tele-operated driving support, etc.

In some implementations, the examples providing the communication assisted sensing services include at least one of the following.

Environment real-time monitoring: wireless signals are used to reconstruct an environment map to further improve positioning accuracy and enable environment related applications, such as realizing an array of real-time monitoring related applications including dynamic 3D map for driving assistance, pedestrian flow statistics, intrusion detection and/or traffic detection, etc.

Autonomous vehicles or unmanned aerial vehicles (UAVs): autonomous vehicle or UAV applications have some common functional requirements. For example, the autonomous vehicles or the UAVs shall support for detecting and avoiding obstacles. Meanwhile, the autonomous vehicles or the UAVs shall have a capability to monitor path information, for example, selecting routes and complying with traffic regulations.

Air pollution monitoring: qualities of received wireless signals display different attenuation characteristics with changes in air humidity, air particulate matter concentration, carrier frequency, etc., which may be used for a weather or air quality detection.

Indoor health care and intrusion detection: it may provide respiration rate estimation, breathing depth estimation, apnea detection, elders' vital signs monitoring and indoor intrusion detection.

Sensing of wireless communication channels and environment could further improve performances of the communication system.

In some examples, sensing assisted communication scenarios include at least one of the following:
sensing a location and a channel environment of the terminal, so as to narrow a beam sweeping range and shorten beam training time;
sensing a location, a velocity, a motion trajectory, and the channel environment of the terminal for a beam prediction, so as to reduce an overhead of a beam measurement and a delay of a beam tracking; or
sensing a property and the channel environment of the terminal, so as to improve a performance of a channel estimation.

As illustrated in FIG. 2, the example provides a sensing implementation method based on a sensed object subscription. The method is performed by a first network function and includes:
At step 21, a first request message is sent to a second network function.

The first request message is configured to acquire sensing privacy subscription information of a sensed object in a wireless sensing.

In all examples of the present invention, the sensing privacy subscription information indicates signed information of the sensed object, and the signed information shows whether the sensing on the sensed object is allowed. That is, the sensing privacy subscription information includes at least one piece of the following information of the sensed object: indication information for indicating that the sensing on the sensed object is allowed; indication information for indicating that the sensing on the sensed object is disallowed; or indication information for indicating a valid time period when the sensing on the sensed object is allowed.

In some examples, the sensed object may be a terminal and/or a base station.

The base station involved in the present invention may be a base station of various types, for example, a base station in a third generation mobile communication (3G) network, a base station in a 4G network, a base station in a 5G network, or another evolved base station. In an example, an access network node involved in the present invention may be the base station 120 described in FIG. 1.

The terminal involved in the present invention may be but not limited to a mobile phone, a wearable device, a vehicle-mounted terminal, an RSU, a smart home terminal, an industrial sensor device and/or a medical device, etc. In some examples, the terminal may be a Redcap terminal or an NR terminal of a predetermined version (e.g., an R17 NR terminal).

The network functions involved in the present invention may be devices in a core network, such as the core network devices in FIG. 1. For example, the first network function is a sensing application function (SAF) and the second network function is a unified data management function (UDM). It is to be noted that the network functions in the core network may also include a UPF, a network exposure function (NEF), a policy control function (PCF) and an SMF. Of course, the network functions may also be other evolved network functions, which is not limited here.

In an example, the first request message is sent to the second network function, where the first request message is configured to acquire the sensing privacy subscription information of the sensed object in the wireless sensing, and the sensing privacy subscription information includes at least one piece of the following information of the sensed object: the indication information for indicating that the sensing on the sensed object is allowed; the indication information for indicating that the sensing on the sensed object is disallowed; or the indication information for indicating the valid time period when the sensing on the sensed object is allowed. In this case, whether the sensing is allowed may be indicated by an indicator. For example, if an information field of the sensing privacy subscription information indicates "1", it means that the sensing on the sensed object is allowed, and if the information field of the sensing privacy subscription information indicates "0", it means that the sensing on the sensed object is disallowed. The time period when the sensing is allowed may be indicated by time points, for example, a starting time point is January 1, 2022 and an ending time point is January 1, 2023. Alternatively, the time period when the sensing is allowed may be indicated by a time point and a duration, for example, the starting time point is January 1, 2022 and the duration is one year.

In an example, the first request message is sent to the second network function, where the first request message is configured to acquire the sensing privacy subscription information of the sensed object in the wireless sensing, and the first request message includes a terminal identifier (ID) of the sensed object and/or sensing privacy subscription indication information. Therefore, after receiving the first request message, the second network function may determine the sensing privacy subscription information of the sensed object based on the terminal ID of the sensed object and/or the sensing privacy subscription indication information.

In an example, a second request message sent by a requester or a client is received, where the second request message includes at least one of the following: an ID of the requester; an ID of the client; or the terminal ID of the sensed object. The first request message is sent to the second network function, where the first request message is configured to acquire the sensing privacy subscription information of the sensed object in the wireless sensing.

It is to be noted that the wireless sensing includes sensing at least one of the following parameters of the sensed object: location, trajectory, direction, velocity, size, shape, etc. The object of the wireless sensing may be an object installed with a terminal, and the object may communicate with the access network and/or the core network through the terminal.

It is to be noted that the sensing privacy subscription information of the sensed object may be pre-stored in the second network function. For example, when registered with the network, the sensed object may report the sensing privacy subscription information to the second network function. Of course, the sensing privacy subscription information of the sensed object may be determined based on a wireless communication protocol. For example, the sensing privacy subscription information may be determined for a predetermined terminal according to the protocol, which is not limited here.

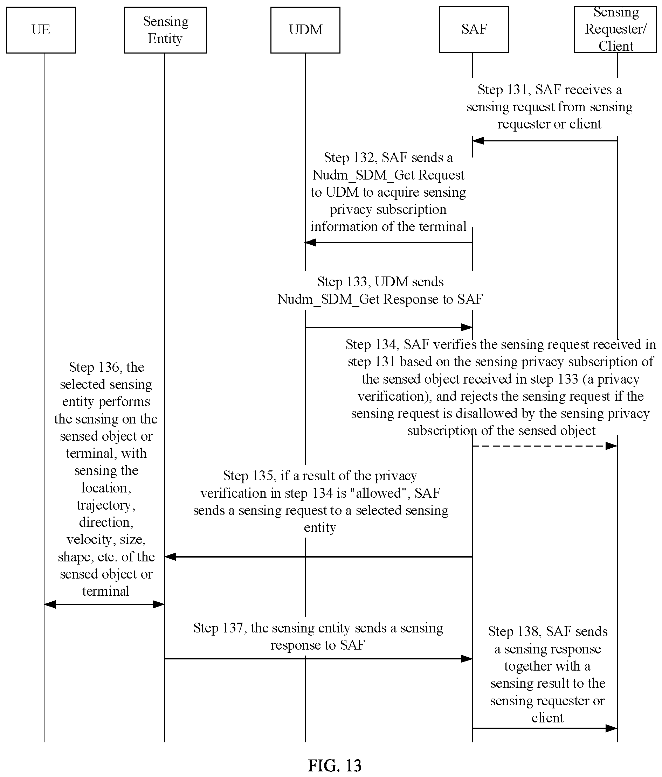

In an example, the first request message is sent to the second network function in response to receiving the second request message sent by the requester or the client, where the second request message includes at least one of the following: the ID of the requester; the ID of the client; or the terminal ID of the sensed object. The first request message is configured to acquire the sensing privacy subscription information of the sensed object in the wireless sensing. In a possible implementation, the requester or the client referred to in the example of the present invention may be, for example, the sensing requester/client as illustrated in FIG. 13.

In an example, the second request message sent by the requester or the client is received, where the second request message includes at least one of the following: the ID of the requester; the ID of the client; or the terminal ID of the sensed object. The first request message is sent to the second network function, where the first request message is configured to acquire the sensing privacy subscription information of the sensed object in the wireless sensing. A first response message sent by the second network function is received, where the first response message includes the sensing privacy subscription information that the first request message requests to acquire.

In an example, the second request message sent by the requester or the client is received, where the second request message includes at least one of the following: the ID of the requester; the ID of the client; or the terminal ID of the sensed object. The first request message is sent to the second network function, where the first request message is configured to acquire the sensing privacy subscription information of the sensed object in the wireless sensing. The first response message sent by the second network function is received, where the first response message includes the sensing privacy subscription information. A verification result is obtained by verifying the first request message based on the first response message. Based on the verification result, it is determined whether to reject the first request message. In all examples of the present invention, the first request message and the second request message may be sent through different signaling, or may be sent through the same signaling, which is not limited in the examples of the present invention.

In an example, the second request message sent by the requester or the client is received, where the second request message includes at least one of the following: the ID of the requester; the ID of the client; or the terminal ID of the sensed object. The first request message is sent to the second network function, where the first request message is configured to acquire the sensing privacy subscription information of the sensed object in the wireless sensing. The first response message sent by the second network function is received, where the first response message includes the sensing privacy subscription information. The verification result is obtained by verifying the first request message based on the first response message. The first request message is rejected in response to the first response message indicating that the first request message is not accepted.

In an example, the second request message sent by the requester or the client is received, where the second request message includes at least one of the following: the ID of the requester; the ID of the client; or the terminal ID of the sensed object. The first request message is sent to the second network function, where the first request message is configured to acquire the sensing privacy subscription information of the sensed object in the wireless sensing. The first response message sent by the second network function is received, where the first response message includes the sensing privacy subscription information. The verification result is obtained by verifying the first request message based on the first response message. A third request message is sent to a sensing entity in response to the first response message indicating that the second request message is accepted, where the third request message includes the ID of the sensing object and/or the ID of the sensed object. In the example of the present invention, the sensing entity may be, for example, the sensing entity as illustrated in FIG. 13.

In an example, the second request message sent by the requester or the client is received, where the second request message includes at least one of the following: the ID of the requester; the ID of the client; or the terminal ID of the sensed object. The first request message is sent to the second network function, where the first request message is configured to acquire the sensing privacy subscription information of the sensed object in the wireless sensing. The first response message sent by the second network function is received, where the first response message includes the sensing privacy subscription information. The verification result is obtained by verifying the first request message based on the first response message. The third request message is sent to the sensing entity in response to the first response message indicating that the second request message is accepted, where the third request message includes the ID of the sensing object and/or the ID of the sensed object. A second response message sent by the sensing entity is received, where the second sensing message includes sensing result information generated by performing a sensing operation on the sensed object.

In an example, the second request message sent by the requester or the client is received, where the second request message includes at least one of the following: the ID of the requester; the ID of the client; or the terminal ID of the sensed object. The first request message is sent to the second network function, where the first request message is configured to acquire the sensing privacy subscription information of the sensed object in the wireless sensing. The first response message sent by the second network function is received, where the first response message includes the sensing privacy subscription information. The verification result is obtained by verifying the first request message based on the first response message. The third request message is sent to the sensing entity in response to the first response message indicating that the second request message is accepted, where the third request message includes the ID of the sensing object and/or the ID of the sensed object. The second response message sent by the sensing entity is received, where the second sensing message includes the sensing result information generated by performing the sensing operation on the sensed object. A third response message is sent to the requester or the client, where the third response message includes the sensing result information.

In the examples of the present invention, the first request message is sent to the second network function, where the first request message is configured to acquire the sensing privacy subscription information of the sensed object in the wireless sensing. In this case, the first network function may send to the second network function for acquiring the sensing privacy subscription information of the sensed object in the wireless sensing, so as to acquire, from the second network function, the sensing privacy subscription information including whether the wireless sensing is allowed to be performed on the sensed object, and perform a wireless sensing procedure based on the sensing privacy subscription information. Compared with a case where whether the wireless sensing is allowed to be performed on the sensed object is not determined, it may be more reliable and safer to perform the wireless sensing procedure.

In the example of the present invention, the first network function may be, for example, the SAF illustrated in FIG. 13. In the example of the present invention, the second network function may be, for example, the UDM illustrated in FIG. 13.

It is to be noted that, as those skilled in the art may understand, the method provided in the example of the present invention may be implemented alone or together with some methods in the examples of the present invention or some methods in related technologies.

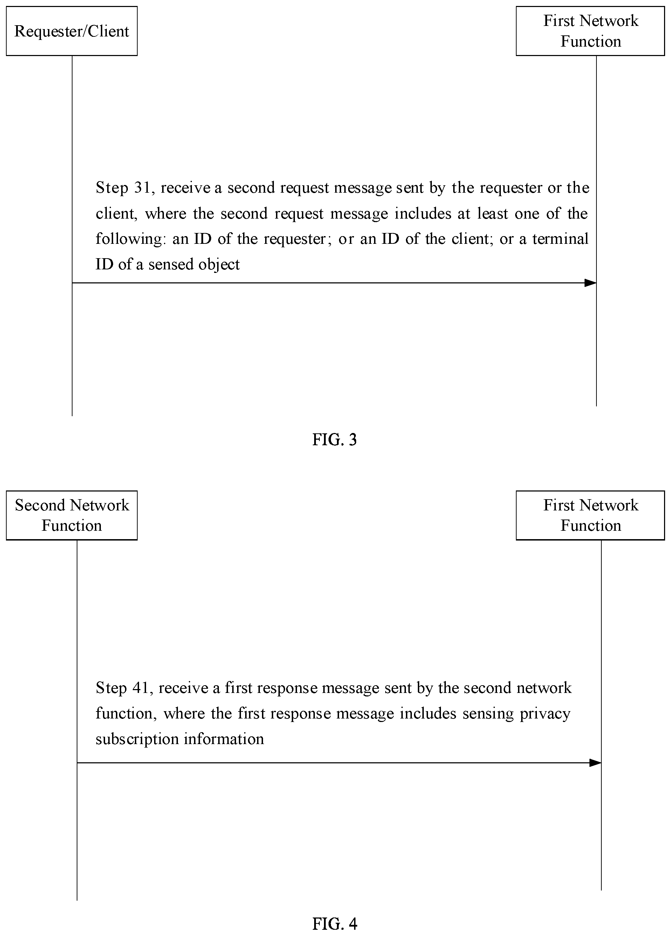

As illustrated in FIG. 3, the example provides a sensing implementation method based on a sensed object subscription. The method is performed by a first network function and includes:
At step 31, a second request message sent by a requester or a client is received.

The second request message includes at least one of the following:
an ID of the requester; or
an ID of the client; or
a terminal ID of a sensed object.

In an example, the second request message sent by the requester or the client is received, where the second request message includes at least one of the following: the ID of the requester; the ID of the client; or the terminal ID of the sensed object. A first request message is sent to a second network function, where the first request message is configured to acquire sensing privacy subscription information of the sensed object in a wireless sensing.

In an example, the first request message is sent to the second network function in response to receiving the second request message sent by the requester or the client. The second request message includes at least one of the following: the ID of the requester; the ID of the client; or the terminal ID of the sensed object. The first request message is configured to acquire the sensing privacy subscription information of the sensed object in the wireless sensing.

In an example, the second request message sent by the requester or the client is received, where the second request message includes at least one of the following: the ID of the requester; the ID of the client; or the terminal ID of the sensed object. The first request message is sent to the second network function, where the first request message is configured to acquire the sensing privacy subscription information of the sensed object in the wireless sensing. A first response message sent by the second network function is received, where the first response message includes the sensing privacy subscription information. A verification result is obtained by verifying the first request message based on the first response message. Based on the verification result, it is determined whether to reject the first request message.

In an example, the second request message sent by the requester or the client is received, where the second request message includes at least one of the following: the ID of the requester; the ID of the client; or the terminal ID of the sensed object. The first request message is sent to the second network function, where the first request message is configured to acquire the sensing privacy subscription information of the sensed object in the wireless sensing. The first response message sent by the second network function is received, where the first response message includes the sensing privacy subscription information. The verification result is obtained by verifying the first request message based on the first response message. The first request message is rejected in response to the first response message indicating that the first request message is not accepted.

In an example, the second request message sent by the requester or the client is received, where the second request message includes at least one of the following: the ID of the requester; the ID of the client; or the terminal ID of the sensed object. The first request message is sent to the second network function, where the first request message is configured to acquire the sensing privacy subscription information of the sensed object in the wireless sensing. The first response message sent by the second network function is received, where the first response message includes the sensing privacy subscription information. The verification result is obtained by verifying the first request message based on the first response message. A third request message is sent to a sensing entity in response to the first response message indicating that the second request message is accepted, where the third request message includes the ID of the sensing object and/or the ID of the sensed object.

In an example, the second request message sent by the requester or the client is received, where the second request message includes at least one of the following: the ID of the requester; the ID of the client; or the terminal ID of the sensed object. The first request message is sent to the second network function, where the first request message is configured to acquire the sensing privacy subscription information of the sensed object in the wireless sensing. The first response message sent by the second network function is received, where the first response message includes the sensing privacy subscription information. The verification result is obtained by verifying the first request message based on the first response message. The third request message is sent to the sensing entity in response to the first response message indicating that the second request message is accepted, where the third request message includes the ID of the sensing object and/or the ID of the sensed object. A second response message sent by the sensing entity is received, where the second sensing message includes sensing result information generated by performing a sensing operation on the sensed object. A third response message is sent to the requester or the client, where the third response message includes the sensing result information.

It is to be noted that, as those skilled in the art may understand, the method provided in the example of the present invention may be implemented alone or together with some methods in the examples of the present invention or some methods in related technologies.

As illustrated in FIG. 4, the example provides a sensing implementation method based on a sensed object subscription. The method is performed by a first network function and includes:
At step 41, a first response message sent by a second network function is received.

The first response message includes sensing privacy subscription information.

In an example, a first request message is sent to the second network function, where the first request message is configured to acquire the sensing privacy subscription information of a sensed object in a wireless sensing. The first response message sent by the second network function is received, where the first response message includes the sensing privacy subscription information.

In an example, a second request message sent by a requester or a client is received, where the second request message includes at least one of the following: an ID of the requester; an ID of the client; or a terminal ID of the sensed object. The first request message is sent to the second network function, where the first request message is configured to acquire the sensing privacy subscription information of the sensed object in the wireless sensing. The first response message sent by the second network function is received, where the first response message includes the sensing privacy subscription information. A verification result is obtained by verifying the first request message based on the first response message. Based on the verification result, it is determined whether to reject the first request message.

In an example, the second request message sent by the requester or the client is received, where the second request message includes at least one of the following: the ID of the requester; the ID of the client; or the terminal ID of the sensed object. The first request message is sent to the second network function, where the first request message is configured to acquire the sensing privacy subscription information of the sensed object in the wireless sensing. The first response message sent by the second network function is received, where the first response message includes the sensing privacy subscription information. The verification result is obtained by verifying the first request message based on the first response message. A third request message is sent to a sensing entity in response to the first response message indicating that the second request message is accepted, where the third request message includes the ID of the sensing object and/or the ID of the sensed object. A second response message sent by the sensing entity is received, where the second sensing message includes sensing result information generated by performing a sensing operation on the sensed object. A third response message is sent to the requester or the client, where the third response message includes the sensing result information.

It is to be noted that, as those skilled in the art may understand, the method provided in the example of the present invention may be implemented alone or together with some methods in the examples of the present invention or some methods in related technologies.

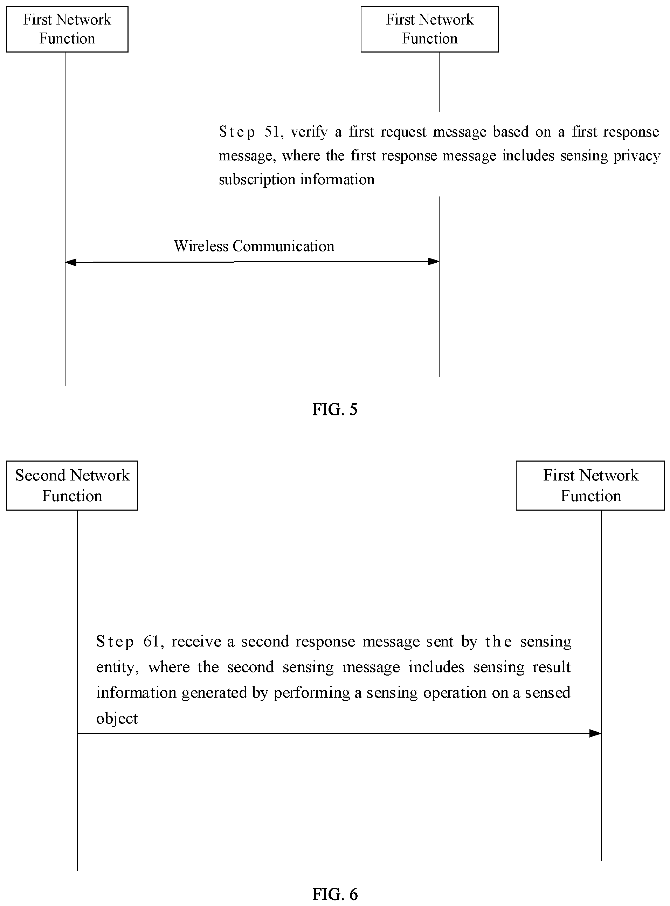

As illustrated in FIG. 5, the example provides a sensing implementation method based on a sensed object subscription. The method is performed by a first network function and includes:
At step 51, a first request message is verified based on a first response message, where the first response message includes sensing privacy subscription information.

In an example, the second request message sent by a requester or a client is received, where the second request message includes at least one of the following: an ID of the requester; an ID of the client; or a terminal ID of a sensed object. The first request message is sent to a second network function, where the first request message is configured to acquire the sensing privacy subscription information of the sensed object in a wireless sensing. The first response message sent by the second network function is received, where the first response message includes the sensing privacy subscription information. A verification result is obtained by verifying the first request message based on the first response message. Based on the verification result, it is determined whether to reject the first request message.

In an example, the second request message sent by the requester or the client is received, where the second request message includes at least one of the following: the ID of the requester; the ID of the client; or the terminal ID of the sensed object. The first request message is sent to the second network function, where the first request message is configured to acquire the sensing privacy subscription information of the sensed object in the wireless sensing. The first response message sent by the second network function is received, where the first response message includes the sensing privacy subscription information. The verification result is obtained by verifying the first request message based on the first response message. The first request message is rejected in response to the first response message indicating that the first request message is not accepted.

In an example, the second request message sent by the requester or the client is received, where the second request message includes at least one of the following: the ID of the requester; the ID of the client; or the terminal ID of the sensed object. The first request message is sent to the second network function, where the first request message is configured to acquire the sensing privacy subscription information of the sensed object in the wireless sensing. The first response message sent by the second network function is received, where the first response message includes the sensing privacy subscription information. The verification result is obtained by verifying the first request message based on the first response message. A third request message is sent to a sensing entity in response to the first response message indicating that the second request message is accepted, where the third request message includes the ID of the sensing object and/or the ID of the sensed object.

It is to be noted that, as those skilled in the art may understand, the method provided in the example of the present invention may be implemented alone or together with some methods in the examples of the present invention or some methods in related technologies.

As illustrated in FIG. 6, the example provides a sensing implementation method based on a sensed object subscription. The method is performed by a first network function and includes:
At step 61, a second response message sent by a sensing entity is received.

The second sensing message includes sensing result information generated by performing a sensing operation on a sensed object.

In an example, the second response message sent by the sensing entity is received, where the second sensing message includes the sensing result information generated by performing the sensing operation on the sensed object. A third response message is sent to a requester or a client in response to receiving the second response message, where the third response message includes the sensing result information.

In an example, a second request message sent by the requester or the client is received, where the second request message includes at least one of the following: an ID of the requester; an ID of the client; or a terminal ID of the sensed object. A first request message is sent to a second network function, where the first request message is configured to acquire sensing privacy subscription information of the sensed object in a wireless sensing. A first response message sent by the second network function is received, where the first response message includes the sensing privacy subscription information. A verification result is obtained by verifying the first request message based on the first response message. A third request message is sent to the sensing entity in response to the first response message indicating that the second request message is accepted, where the third request message includes the ID of the sensing object and/or the ID of the sensed object. The second response message sent by the sensing entity is received, where the second sensing message includes the sensing result information generated by performing the sensing operation on the sensed object. The third response message is sent to the requester or the client, where the third response message includes the sensing result information.

It is to be noted that, as those skilled in the art may understand, the method provided in the example of the present invention may be implemented alone or together with some methods in the examples of the present invention or some methods in related technologies.

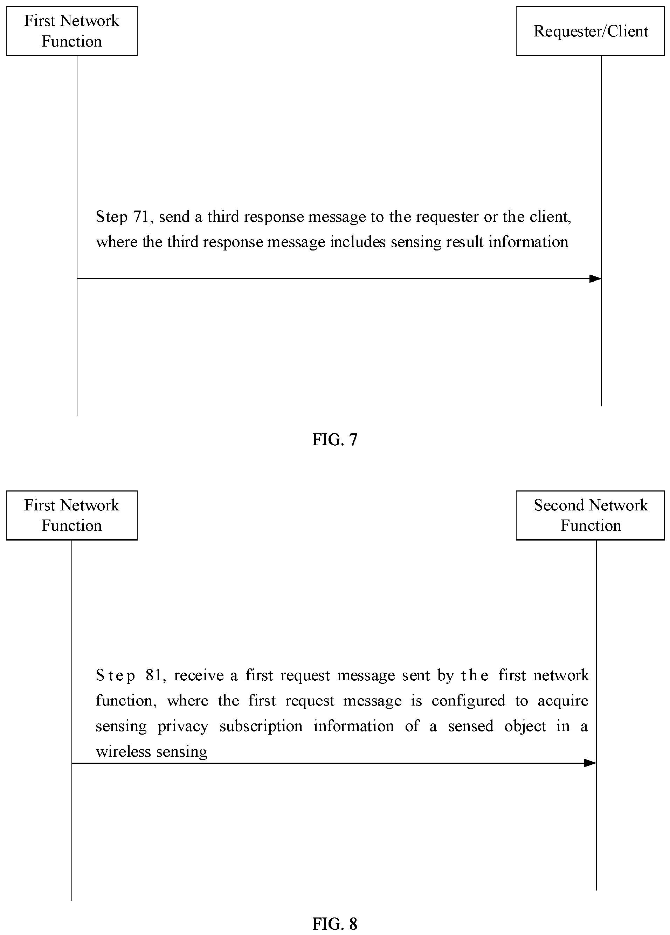

As illustrated in FIG. 7, the example provides a sensing implementation method based on a sensed object subscription. The method is performed by a first network function and includes:
At step 71, a third response message is sent to a requester or a client.

The third response message includes sensing result information.

In an example, a second response message sent by a sensing entity is received, where the second sensing message includes the sensing result information generated by performing a sensing operation on a sensed object. The third response message is sent to the requester or the client in response to receiving the second response message, where the third response message includes the sensing result information.

In an example, a second request message sent by the requester or the client is received, where the second request message includes at least one of the following: an ID of the requester; an ID of the client; or a terminal ID of the sensed object. A first request message is sent to a second network function, where the first request message is configured to acquire sensing privacy subscription information of the sensed object in a wireless sensing. A first response message sent by the second network function is received, where the first response message includes the sensing privacy subscription information. A verification result is obtained by verifying the first request message based on the first response message. A third request message is sent to the sensing entity in response to the first response message indicating that the second request message is accepted, where the third request message includes the ID of the sensing object and/or the ID of the sensed object. The second response message sent by the sensing entity is received, where the second sensing message includes the sensing result information generated by performing the sensing operation on the sensed object. The third response message is sent to the requester or the client, where the third response message includes the sensing result information.

It is to be noted that, as those skilled in the art may understand, the method provided in the example of the present invention may be implemented alone or together with some methods in the examples of the present invention or some methods in related technologies.

As illustrated in FIG. 8, the example provides a sensing implementation method based on a sensed object subscription. The method is performed by a second network function and includes:
At step 81, a first request message sent by a first network function is received.

The first request message is configured to acquire sensing privacy subscription information of a sensed object in a wireless sensing.

In some examples, the sensed object may be a terminal and/or a base station.

The base station involved in the present invention may be a base station of various types, for example, a base station in a 3G network, a base station in a 4G network, a base station in a 5G network, or another evolved base station. In an example, an access network node involved in the present invention may be the base station 120 described in FIG. 1.

The terminal involved in the present invention may be but not limited to a mobile phone, a wearable device, a vehicle-mounted terminal, an RSU, a smart home terminal, an industrial sensor device and/or a medical device, etc. In some examples, the terminal may be a Redcap terminal or an NR terminal of a predetermined version (e.g., an R17 NR terminal).

The network functions involved in the present invention may be devices in a core network, such as the core network devices in FIG. 1. For example, the first network function is an SAF and the second network function is a UDM. It is to be noted that the network functions in the core network may also include a UPF, an NEF, a PCF and an SMF. Of course, the network functions may also be other evolved network functions, which is not limited here.

In an example, the first request message sent by the first network function is received, where the first request message is configured to acquire the sensing privacy subscription information of the sensed object in the wireless sensing, and the sensing privacy subscription information includes at least one piece of the following information of the sensed object: information for indicating that the sensing is allowed; information for indicating that the sensing is disallowed; or a valid time period when the sensing is allowed. In this case, whether the sensing is allowed may be indicated by an indicator. For example, if an information field of the sensing privacy subscription information indicates "1", it means that the sensing is allowed, and if the information field of the sensing privacy subscription information indicates "0", it means that the sensing is disallowed. The time period when the sensing is allowed may be indicated by time points, for example, a starting time point is January 1, 2022 and an ending time point is January 1, 2023. Alternatively, the time period when the sensing is allowed may be indicated by a time point and a duration, for example, the starting time point is January 1, 2022 and the duration is one year.

In an example, the first request message sent by the first network function is received, where the first request message is configured to acquire the sensing privacy subscription information of the sensed object in wireless sensing, and the first request message includes a terminal ID of the sensed object and/or sensing privacy subscription indication information. Therefore, after receiving the first request message, the second network function may determine the sensing privacy subscription information of the sensed object based on the terminal ID of the sensed object and/or the sensing privacy subscription indication information.

It is to be noted that the wireless sensing includes sensing location, trajectory, direction, velocity, size, shape, etc. of the sensed object. The object of the wireless sensing may be an object installed with the terminal, and the object may communicate with an access network and/or the core network through the terminal.

It is to be noted that the sensing privacy subscription information of the sensed object may be pre-stored in the second network function. For example, when registered with the network, the sensed object may report the sensing privacy subscription information to the second network function. Of course, the sensing privacy subscription information of the sensed object may be determined based on a wireless communication protocol. For example, the sensing privacy subscription information may be determined for a predetermined terminal according to the protocol, which is not limited here.

In an example, the first request message sent by the first network function is received, where the first request message is configured to acquire the sensing privacy subscription information of the sensed object in the wireless sensing. A first response message is sent to the first network function, where the first response message includes the sensing privacy subscription information. In an example, the sensing privacy subscription information is used to verify a first request message.

In an example, the first network function receives the second request message sent by a requester or a client, where the second request message includes at least one of the following: an ID of the requester; an ID of the client; or a terminal ID of the sensed object. The first network function sends the first request message to the second network function, where the first request message is configured to acquire the sensing privacy subscription information of the sensed object in the wireless sensing. After the second network function receives the first request message, the first network function receives the first response message sent by the second network function, where the first response message includes the sensing privacy subscription information. The first network function obtains a verification result by verifying the first request message based on the first response message. The first network function sends a third request message to a sensing entity in response to the first response message indicating that the second request message is accepted, where the third request message includes the ID of the sensing object and/or the ID of the sensed object. The first network function receives a second response message sent by the sensing entity, where the second sensing message includes sensing result information generated by performing a sensing operation on the sensed object. The first network function sends a third response message to the requester or the client, where the third response message includes the sensing result information.

It is to be noted that, as those skilled in the art may understand, the method provided in the example of the present invention may be implemented alone or together with some methods in the examples of the present invention or some methods in related technologies.

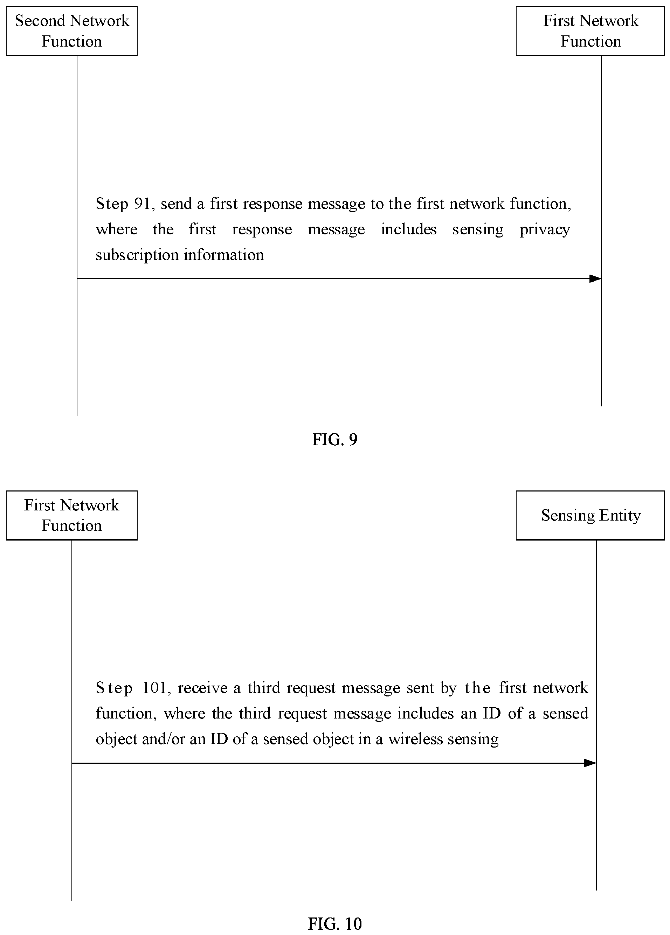

As illustrated in FIG. 9, the example provides a sensing implementation method based on a sensed object subscription. The method is performed by a second network function and includes:
At step 91, a first response message is sent to a first network function.

The first response message includes sensing privacy subscription information.

In an example, a first request message sent by the first network function is received, where the first request message is configured to acquire the sensing privacy subscription information of a sensed object in a wireless sensing. The first response message is sent to the first network function, where the first response message includes the sensing privacy subscription information. In an example, the sensing privacy subscription information is used to verify a first request message.

In an example, the first network function receives the second request message sent by a requester or a client, where the second request message includes at least one of the following: an ID of the requester; an ID of the client; or a terminal ID of the sensed object. The first network function sends the first request message to the second network function, where the first request message is configured to acquire the sensing privacy subscription information of the sensed object in the wireless sensing. After the second network function receives the first request message, the first network function receives the first response message sent by the second network function, where the first response message includes the sensing privacy subscription information. The first network function obtains a verification result by verifying the first request message based on the first response message. The first network function sends a third request message to a sensing entity in response to the first response message indicating that the second request message is accepted, where the third request message includes the ID of the sensing object and/or the ID of the sensed object. The first network function receives a second response message sent by the sensing entity, where the second sensing message includes sensing result information generated by performing a sensing operation on the sensed object. The first network function sends a third response message to the requester or the client, where the third response message includes the sensing result information.

It is to be noted that, as those skilled in the art may understand, the method provided in the example of the present invention may be implemented alone or together with some methods in the examples of the present invention or some methods in related technologies.

As illustrated in FIG. 10, the example provides a sensing implementation method based on a sensed object subscription. The method is performed by a sensing entity and includes:
At step 101, a third request message sent by a first network function is received.

The third request message includes an ID of a sensed object and/or an ID of a sensed object in a wireless sensing.

In some examples, the sensed object may be a terminal and/or a base station.

In some examples, the sensing entity may be a terminal and/or a base station.

The base station involved in the present invention may be a base station of various types, for example, a base station in a 3G network, a base station in a 4G network, a base station in a 5G network, or another evolved base station. In an example, an access network node involved in the present invention may be the base station 120 described in FIG. 1.

The terminal involved in the present invention may be but not limited to a mobile phone, a wearable device, a vehicle-mounted terminal, an RSU, a smart home terminal, an industrial sensor device and/or a medical device, etc. In some examples, the terminal may be a Redcap terminal or an NR terminal of a predetermined version (e.g., an R17 NR terminal).

The network functions involved in the present invention may be devices in a core network, such as the core network devices in FIG. 1. For example, the first network function is an SAF and a second network function is a UDM. It is to be noted that the network functions in the core network may also include a UPF, an NEF, a PCF and an SMF. Of course, the network functions may also be other evolved network functions, which is not limited here.

It is to be noted that the wireless sensing includes sensing location, trajectory, direction, velocity, size, shape, etc. of the sensed object. The object of the wireless sensing may be an object installed with the terminal, and the object may communicate with an access network and/or the core network through the terminal.

In an example, the third request message sent by the first network function is received, where the third request message includes the ID of the sensed object and/or the ID of the sensed object in the wireless sensing. A second response message is sent to the first network function, where the second sensing message includes sensing result information generated by performing a sensing operation on the sensed object.

In an example, the third request message sent by the first network function is received, where the third request message includes the ID of the sensed object and/or the ID of the sensed object in the wireless sensing. The sensing operation is performed on the sensed object based on the third request message, and the second response message is sent to the first network function, where the second sensing message includes the sensing result information generated by performing the sensing operation on the sensed object.

In an example, the first network function receives a second request message sent by a requester or a client, where the second request message includes at least one of the following: the ID of the requester; the ID of the client; or the terminal ID of the sensed object. The first network function sends a first request message to the second network function, where the first request message is configured to acquire sensing privacy subscription information of the sensed object in the wireless sensing. After the second network function receives the first request message, the first network function receives a first response message sent by the second network function, where the first response message includes the sensing privacy subscription information. The first network function obtains a verification result by verifying the first request message based on the first response message. The first network function sends the third request message to the sensing entity in response to the first response message indicating that the second request message is accepted, where the third request message includes the ID of the sensing object and/or the ID of the sensed object. The sensing entity receives the third request message sent by the first network function, where the third request message includes the ID of the sensed object and/or the ID of the sensed object in the wireless sensing. The sensing entity performs the sensing operation on the sensed object based on the third request message, and sends the second response message to the first network function, where the second sensing message includes the sensing result information generated by performing the sensing operation on the sensed object. The first network function receives the second response message sent by the sensing entity, where the second sensing message includes the sensing result information generated by performing the sensing operation on the sensed object. The first network function sends a third response message to the requester or the client, where the third response message includes the sensing result information.

It is to be noted that, as those skilled in the art may understand, the method provided in the example of the present invention may be implemented alone or together with some methods in the examples of the present invention or some methods in related technologies.

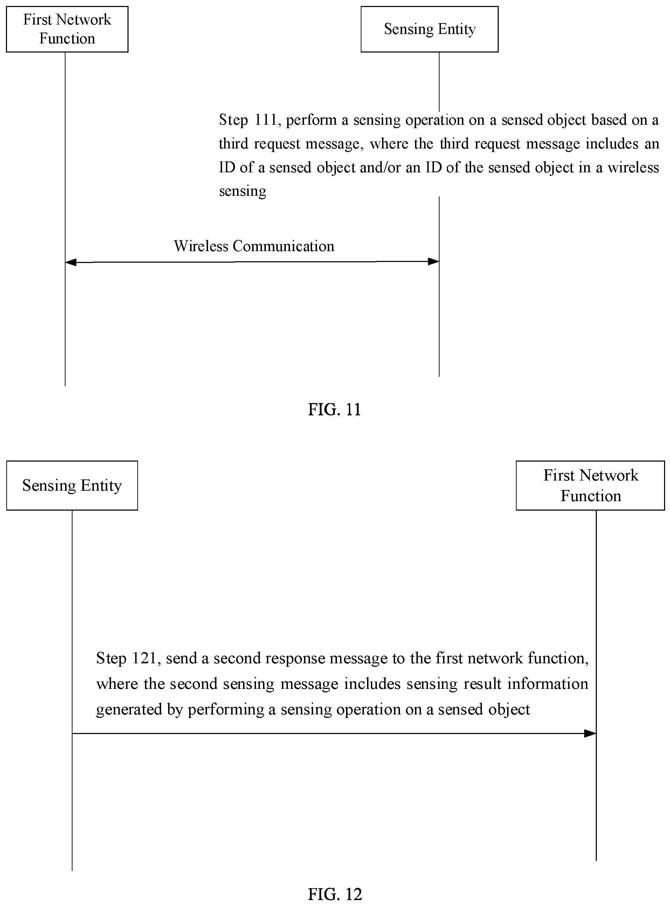

As illustrated in FIG. 11, the example provides a sensing implementation method based on a sensed object subscription. The method is performed by a sensing entity and includes:
At step 111, a sensing operation is performed on a sensed object based on a third request message.

The third request message includes an ID of a sensed object and/or an ID of the sensed object in a wireless sensing.

In an example, the third request message sent by a first network function is received, where the third request message includes the ID of the sensed object and/or the ID of the sensed object in the wireless sensing. The sensing operation is performed on the sensed object based on the third request message, and a second response message is sent to the first network function. The second sensing message includes sensing result information generated by performing the sensing operation on the sensed object.

It is to be noted that, as those skilled in the art may understand, the method provided in the example of the present invention may be implemented alone or together with some methods in the examples of the present invention or some methods in related technologies.

As illustrated in FIG. 12, the example provides a sensing implementation method based on a sensed object subscription. The method is performed by a sensing entity and includes:
At step 121, a second response message is sent to a first network function.

The second sensing message includes sensing result information generated by performing a sensing operation on a sensed object.

In an example, a third request message sent by the first network function is received, where the third request message includes an ID of a sensed object and/or an ID of the sensed object in a wireless sensing. The sensing operation is performed on the sensed object based on the third request message, and the second response message is sent to the first network function, where the second sensing message includes the sensing result information generated by performing the sensing operation on the sensed object.

It is to be noted that, as those skilled in the art may understand, the method provided in the example of the present invention may be implemented alone or together with some methods in the examples of the present invention or some methods in related technologies.

In order to better understand the examples of the present invention, the technical solutions of the present invention are further described below through an example.

### Example 1

Referring to FIG. 13, a sensing implementation method based on a sensed object subscription is provided in the example. The method includes:
At step 131, an SAF (corresponding to the first network function in the present invention) receives a sensing request (corresponding to the first request message in the present invention) from a sensing requester or client, which includes an ID of the sensing requester or client and a terminal ID of a sensed object. The ID of the sensing requester or client may be a generic public subscription identifier (GPSI). The terminal ID of the sensed object may be a subscription permanent identifier (SUPI).

At step 132, the SAF sends a Nudm_SDM_Get Request (corresponding to the second request message) to a UDM (the second network function) to acquire sensing privacy subscription information of the terminal. The sensing privacy subscription information includes the terminal ID (e.g., SUPI) of the sensed object received in step 131 and sensing privacy subscription indication information.

At step 133, the UDM sends Nudm_SDM_Get Response (the first response message) to the SAF, which includes the sensing privacy subscription information of the sensed object.

At step 134, the SAF verifies the sensing request received in step 131 based on the sensing privacy subscription of the sensed object received in step 133 (a privacy verification), and rejects the sensing request if the sensing request is disallowed by the sensing privacy subscription of the sensed object. The message for rejecting the sensing request may include a cause, for example, that a sensing is disallowed on the sensed object or terminal.

At step 135, if a result of the privacy verification in step 134 is "allowed", the SAF sends a sensing request to a selected sensing entity, which includes the ID of the sensed object or terminal (e.g., SUPI).

At step 136, the selected sensing entity performs the sensing on the sensed object or terminal, with sensing the location, trajectory, direction, velocity, size, shape, etc. of the sensed object or terminal.

At step 137, the sensing entity sends a sensing response (corresponding to the second response message in the present invention) to the SAF. The sensing response includes the sensing data or result generated in step 136.

At step 138, the SAF sends a sensing response together with a sensing result to the sensing requester or client. The sensing result is generated according to the sensing data or result received in step 137.

In the example of the present invention, the SAF sends the first request message to the UDM, where the first request message is configured to acquire the sensing privacy subscription information of the sensed object in the wireless sensing. In this case, the SAF may send to the UDM for acquiring the sensing privacy subscription information of the sensed object in the wireless sensing, so as to acquire, from the UDM, the sensing privacy subscription information including whether the wireless sensing is allowed to be performed on the sensed object, and perform a wireless sensing procedure based on the sensing privacy subscription information. Compared with a case where whether the wireless sensing is allowed to be performed on the sensed object is not determined, it may be more reliable and safer to perform the wireless sensing procedure.

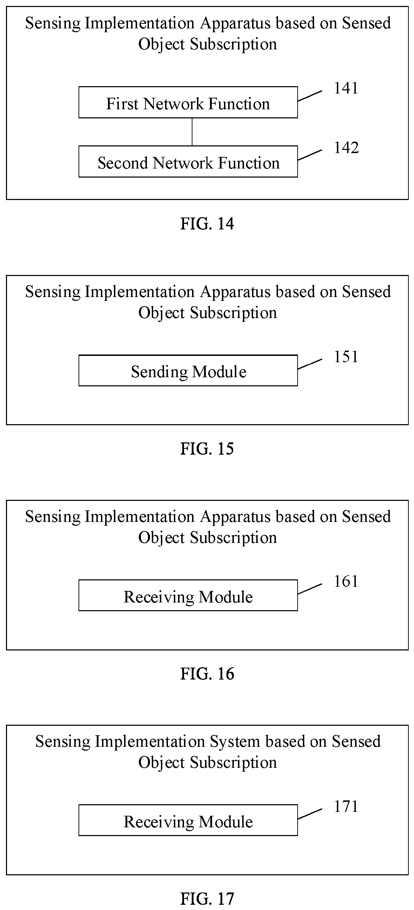

As illustrated in FIG. 14, an example of the present invention provides a sensing implementation system based on a sensed object subscription. The system includes a first network function 141 and a second network function 142. The first network function 141 performs the methods performed by the first network function 141 as described in the present invention. The second network function 142 performs the methods performed by the second network function 142 as described in the present invention.

It is to be noted that those skilled in the art may understand that the method provided in the example of the present invention may be implemented alone or together with some methods in the examples of the present invention or some methods in related technologies.

As illustrated in FIG. 15, an example of the present invention provides a sensing implementation apparatus based on a sensed object subscription, which includes:
a sending module 151 that is configured to send a first request message to a second network function.

The first request message is configured to acquire sensing privacy subscription information of a sensed object in a wireless sensing.

It is to be noted that those skilled in the art may understand that the method provided in the example of the present invention may be implemented alone or together with some methods in the examples of the present invention or some methods in related technologies.

As illustrated in FIG. 16, an example of the present invention provides a sensing implementation apparatus based on a sensed object subscription, which includes:
a receiving module 161 that is configured to receive a first request message sent by a first network function.

The first request message is configured to acquire sensing privacy subscription information of a sensed object in a wireless sensing.

It is to be noted that those skilled in the art may understand that the method provided in the example of the present invention may be implemented alone or together with some methods in the examples of the present invention or some methods in related technologies.

As illustrated in FIG. 17, an example of the present invention provides a sensing implementation apparatus based on a sensed object subscription, which includes:
a receiving module 171 that is configured to receive a third request message sent by a first network function.

The third request message includes an ID of a sensing object and/or an ID of a sensed object in a wireless sensing.

It is to be noted that those skilled in the art may understand that the method provided in the example of the present invention may be implemented alone or together with some methods in the examples of the present invention or some methods in related technologies.

An example of the present invention provides a communication device. The communication device includes:
one or more processors; and
one or more memories for storing executable instructions for the one or more processors.

The one or more processors are configured to implement, when running the executable instructions, the method applied in any example of the present invention.

The one or more processors may include a storage medium of various types. The storage medium is a non-transitory computer storage medium that is capable of keeping information thereon stored after the communication device is powered off.

The one or more processors may be connected to the one or more memories through a bus or the like, and is configured to read an executable program stored on the one or more memories.

An example of the present invention also provides a computer storage medium storing a computer executable program. The executable program, when being executed by one or more processors, implements the method according to any example of the present invention.

With respect to the apparatuses in the foregoing examples, the specific manner in which each module performs its operation has been described in detail in the examples of the related methods, and will not be described in detail here.

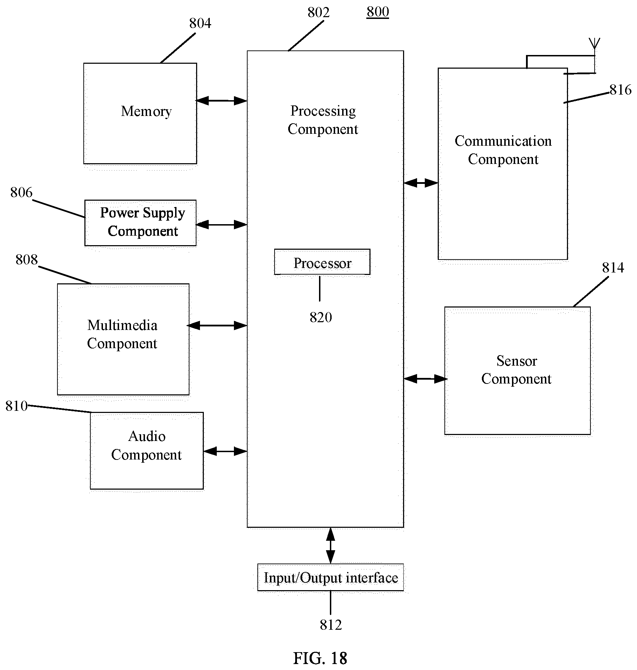

As illustrated in FIG. 18, an example of the present invention provides a structure of a terminal.

Referring to FIG. 18, which illustrates a terminal 800. The terminal 800 is provided in the example of the present invention. The terminal 800 may specifically be a mobile phone, a computer, a digital broadcast terminal, a messaging device, a game console, a tablet device, a medical device, a fitness device, a personal digital assistant, etc.

Referring to FIG. 18, the terminal 800 may include one or more of the following components: a processing component 802, a memory 804, a power supply component 806, a multimedia component 808, an audio component 810, an input/output (I/O) interface 812, a sensor component 814, and a communication component 816.

The processing component 802 generally controls the overall operations of the terminal 800, such as operations associated with display, phone calls, data communications, camera operations, and recording operations. The processing component 802 may include one or more processors 820 to execute instructions to complete all or a part of the steps of the above methods. In addition, the processing component 802 may include one or more modules which facilitate the interaction between the processing component 802 and other components. For example, the processing component 802 may include a multimedia module to facilitate the interaction between the multimedia component 808 and the processing component 802.

The memory 804 is configured to store various types of data to support the operations of the device 800. Examples of such data include instructions for any application or method operated on the terminal 800, contact data, phonebook data, messages, pictures, videos, and the like. The memory 804 may be implemented by any type of volatile or non-volatile storage device or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The power supply component 806 provides power for various components of the terminal 800. The power supply component 806 may include a power management system, one or more power supplies, and other components associated with generating, managing, and distributing power for the terminal 800.

The multimedia component 808 includes a screen providing an output interface between the terminal 800 and a user. In some examples, the screen may include a liquid crystal display (LCD) and a touch panel (TP). If the screen includes the TP, the screen may be implemented as a touch screen to receive input signals from the user. The TP may include one or more touch sensors to sense touches, swipes, and gestures on the TP. The touch sensors may not only sense a boundary of a touch or swipe, but also sense a lasting time and a pressure associated with the touch or swipe. In some examples, the multimedia component 808 includes a front camera and/or a rear camera. The front camera and/or the rear camera may receive external multimedia data when the device 800 is in an operating mode, such as a photographing mode or a video mode. Each of the front camera and the rear camera may be a fixed optical lens system or have focal length and optical zooming capability.

The audio component 810 is configured to output and/or input an audio signal. For example, the audio component 810 includes a microphone (MIC) that is configured to receive an external audio signal when the terminal 800 is in an operating mode, such as a call mode, a recording mode, and a voice recognition mode. The received audio signal may be further stored in memory 804 or transmitted via communication component 816. In some examples, the audio component 810 also includes a speaker for outputting an audio signal.

The I/O interface 812 provides an interface between the processing component 802 and a peripheral interface module. The above peripheral interface module may be a keyboard, a click wheel, buttons, or the like. These buttons may include but not limited to a home button, a volume button, a start button and a lock button.

The sensor component 814 includes one or more sensors to provide the terminal 800 with status assessments in various aspects. For example, the sensor component 814 may detect an open/closed state of the device 800 and a relative positioning of components such as the display and keypad of the terminal 800, and the sensor component 814 may also detect a change in position of the terminal 800 or a component of the terminal 800, the presence or absence of user contact with the terminal 800, orientation or acceleration/deceleration of the terminal 800, and temperature change of the terminal 800. The sensor component 814 may include a proximity sensor configured to detect the presence of a nearby object without any physical contact. The sensor component 814 may also include a light sensor, such as a complementary metal oxide semiconductor (CMOS) or a charge-coupled device (CCD) image sensor, for being applied in imaging applications. In some examples, the sensor component 814 may also include an acceleration sensor, a gyro sensor, a magnetic sensor, a pressure sensor, or a temperature sensor.

The communication component 816 is configured to facilitate wired or wireless communication between the terminal 800 and other devices. The terminal 800 may access a wireless network based on a communication standard, such as WiFi, 2G, 3G or a combination thereof. In an example, the communication component 816 receives broadcast signals or broadcast related information from an external broadcast management system via a broadcast channel. In an example, the communication component 816 also includes a near field communication (NFC) module to facilitate short-range communication. For example, the NFC module may be implemented based on a radio frequency identification (RFID) technology, an infrared data association (IrDA) technology, an ultra-wideband (UWB) technology, a Bluetooth^{®} (BT) technology and other technologies.

In one or more examples, the terminal 800 may be implemented by one or more application specific integrated circuits (ASIC), digital signal processors (DSP), digital signal processing equipment (DSPD), programmable logic devices (PLD), field programmable gate array (FPGA), controller, microcontroller, microprocessor, or other electronics to perform the foregoing methods.

In one or more examples, there is also provided a non-transitory computer-readable storage medium including instructions, such as the memory 804 including instructions. These instructions may be executed by the one or more processors 820 of the terminal 800 to complete the foregoing methods. For example, the non-transitory computer-readable storage medium may be an ROM, a random access memory (RAM), a CD-ROM, a magnetic tape, a floppy disk, an optical data storage device, and the like.

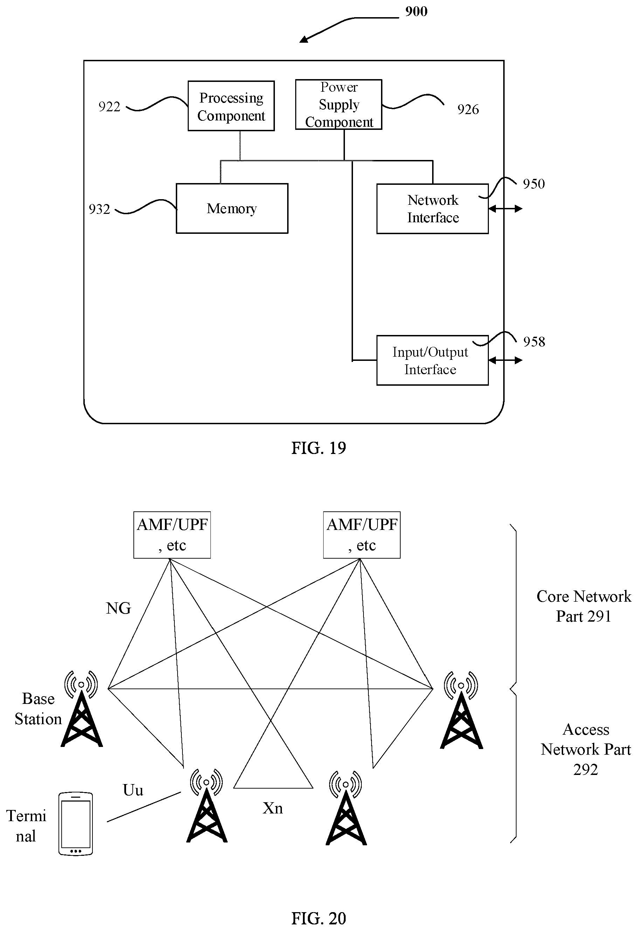

As illustrated in FIG. 19, an example of the present invention illustrates a structure of a base station. For example, the base station 900 may be provided as a network-side device. Referring to FIG. 19, the base station 900 includes a processing component 922 which further includes one or more processors, and a memory resource represented by a memory 932 which is used to store instructions that may be executed by the processing component 922, such as application programs. The application programs stored in the memory 932 may include one or more modules, each of which corresponds to a set of instructions. In addition, the processing component 922 is configured to execute instructions to perform any of the methods applied to the base station.

The base station 900 may also include a power supply component 926 configured to perform power management for the base station 900, a wired or wireless network interface 950 configured to connect the base station 900 to a network, and an input/output (I/O) interface 958. The base station 900 may perform operations by adopting an operating system stored in the memory 932, such as Windows Server^{™} Mac OS X^{™}, Unix^{™}, Linux^{™}, FreeBSD^{™} or the like.

As illustrated in FIG. 20, an example of the present invention illustrates a network architecture of a 5G system, including a core network part 291 and an access network part 292. The core network part includes core network devices. The core network devices mainly include communication nodes such as an AMF, a UPF, a NEF, a user data register (UDR) and an SMF. The access network part includes base stations. The AMF is mainly responsible for registration management, connection management, access management, mobility management, and various functions related to security and access management and authorization, etc. The UPF is mainly responsible for various functions related to data plane anchor points, protocol data unit (PDU) session points connecting to a data network, packets routing and forwarding, traffic usage reporting and legal monitoring, etc. The NEF is mainly responsible for functions related to providing a secure path to expose services and capabilities of 3GPP network functions to an application function (AF) and providing a secure path for the AF to provide information to the 3GPP network functions. The UDR is mainly responsible for storing important process data during a wireless communication. The SMF is mainly responsible for various functions related to session management, charging and QoS policy control, legal monitoring, charging data collection and downlink data notification, etc.

Other implementations of the present invention will be readily apparent to those skilled in the art after implementing the invention by referring to the specification. The present invention is intended to cover any variations, uses, or adaptations of the present invention that are in accordance with the general principles thereof and include common general knowledge or conventional technical means in the art that are not disclosed in the present invention. The description and the examples are only illustrative, and the true scope and spirit of the present invention are set forth in the appended claims.

It should be understood that the present invention is not limited to the above described accurate structures illustrated in the drawings, and various modifications and changes can be made to the present invention without departing from the scope thereof. The scope of the present invention is to be limited only by the appended claims.

## Claims

1. A sensing implementation method based on a sensed object subscription, performed by a first network function, comprising:
sending a first request message to a second network function,
wherein the first request message is configured to acquire sensing privacy subscription information of a sensed object in a wireless sensing.

2. The method according to claim 1, wherein the sensing privacy subscription information comprises at least one piece of following information of the sensed object:
information for indicating that a sensing is allowed;
information for indicating that the sensing is disallowed; or
a valid time period when the sensing is allowed.

3. The method according to claim 1, wherein the first request message comprises a terminal identifier, ID, of the sensed object and/or sensing privacy subscription indication information.

4. The method according to claim 1, further comprising:
receiving a second request message sent by a requester or a client,
wherein the second request message comprises at least one of:
an identifier, ID, of the requester;
an ID of the client; or
a terminal ID of the sensed object.

5. The method according to claim 1, further comprising:
receiving a first response message sent by the second network function,
wherein the first response message comprises the sensing privacy subscription information.

6. The method according to claim 5, further comprising:
verifying the first request message based on the first response message.

7. The method according to claim 6, further comprising:
rejecting the first request message in response to the first response message indicating that the first request message is not accepted.

8. The method according to claim 6, further comprising:
sending a third request message to a sensing entity in response to the first response message indicating that the second request message is accepted,
wherein the third request message comprises an identifier, ID, of a sensed object and/or an ID of the sensed object in the wireless sensing.

9. The method according to claim 8, further comprising:
receiving a second response message sent by the sensing entity,
wherein the second sensing message comprises sensing result information generated by performing a sensing operation on the sensed object.

10. The method according to claim 9, further comprising:
sending a third response message to a requester or a client,
wherein the third response message comprises the sensing result information.

11. The method according to claim 1, wherein
the first network function is a sensing application function, SAF; and
the second network function is a unified data management function, UDM.

12. A sensing implementation method based on a sensed object subscription, performed by a second network function, comprising:
receiving a first request message sent by a first network function,
wherein the first request message is configured to acquire sensing privacy subscription information of a sensed object in a wireless sensing.

13. The method according to claim 12, wherein the sensing privacy subscription information comprises at least one piece of following information of the sensed object:
information for indicating that a sensing is allowed;
information for indicating that the sensing is disallowed; or
a valid time period when the sensing is allowed.

14. The method according to claim 12, wherein the first request message comprises a terminal identifier, ID, of the sensed object and/or sensing privacy subscription indication information.

15. The method according to claim 12, further comprising:
sending a first response message to the first network function,
wherein the first response message comprises the sensing privacy subscription information.

16. The method according to claim 12, wherein
the first network function is a sensing application function, SAF; and
the second network function is a unified data management function, UDM.

17. A sensing implementation method based on a sensed object subscription, performed by a sensing entity, comprising:
receiving a third request message sent by a first network function,
wherein the third request message comprises an identifier, ID, of a sensed object and/or an ID of a sensed object in a wireless sensing.

18. The method according to claim 17, further comprising:
performing a sensing operation on the sensed object based on the third request message.

19. The method according to claim 17, further comprising:
sending a second response message to the first network function,
wherein the second sensing message comprises sensing result information generated by performing a sensing operation on the sensed object.

20. A sensing implementation system based on a sensed object subscription, comprising a first network function, and
a second network function,
wherein the first network function is configured to perform the method according to any of claims 1 to 11; and
the second network function is configured to perform the method according to any of claims 12 to 16.

21. A wireless sensing apparatus, comprising:
a sending module, configured to send a first request message to a second network function,
wherein the first request message is configured to acquire sensing privacy subscription information of a sensed object in a wireless sensing.

22. A sensing implementation apparatus based on a sensed object subscription, comprising:
a receiving module, configured to receive a first request message sent by a first network function,
wherein the first request message is configured to acquire sensing privacy subscription information of a sensed object in a wireless sensing.

23. A sensing implementation apparatus based on a sensed object subscription, comprising:
a receiving module, configured to receive a third request message sent by a first network function,
wherein the third request message comprises an identifier, ID, of a sensing object and/or an ID of a sensed object in a wireless sensing.

24. A communication device, comprising:
one or more antennas;
one or more memories; and
one or more processors, connected to the one or more antennas and the one or more memories separately, and configured to execute computer executable instructions stored in the one or more memories to control transmissions and receptions of the one or more antennas and to be capable of implementing the method according to any one of claims 1 to 10.

25. A computer storage medium, storing computer-executable instructions, wherein the computer-executable instructions, after executed by one or more processors, are capable of implementing the method according to any one of claims 1 to 10.
